# EUROPÄISCHE PATENTANMELDUNG

(11) **EP 3 792 057 A1**
(43) Veröffentlichungstag der Anmeldung: **17.03.2021**
(21) Anmeldenummer: 20194538.3
(22) Anmeldetag: 04.09.2020
(51) Int. Cl.: B32B 29/00, B32B 33/00, B32B 37/00, B32B 38/04, A47G 21/00, B26B 3/00, B31F 1/00, B31F 1/07, B32B 7/14

(54) **VERFAHREN ZUM HERSTELLEN VON ZUMINDEST TEILWEISE STABFÖRMIGEN ERZEUGNISSEN AUS PAPIER, KARTON ODER EINEM ANDEREN FASERHALTIGEN MATERIAL**

(30) Priorität: 13.09.2019 DE 102019124699
(71) Anmelder: AR Packaging GmbH, 65830 Kriftel (DE)
(72) Erfinder: Mack, Ralf, 86343 Königsbrunn (DE)
(74) Vertreter: Hauck Patentanwaltspartnerschaft mbB

(57) **Zusammenfassung**

Verfahren zum Herstellen von zumindest teilweise stabförmigen Erzeugnissen (19, 20) aus Papier, Karton oder einem anderen faserhaltigen Flachmaterial umfassend die folgenden Schritte:
• mehrere Lagen des Flachmaterials (7, 8, 9) werden mit Hilfe eines Kaschiermittels zu einem Lagenaufbau (13) aufeinander kaschiert,
• aus dem Lagenaufbau (13) werden bei noch nicht oder erst teilweise ausgehärtetem Kaschiermittel (15) in einem Presswerkezeug (16) unter Anwendung von Druck zumindest teilweise stabförmige Erzeugnisse (19, 20) geformt,
• die Erzeugnisse (19, 20) werden beim oder nach dem Formen aus dem Lagenaufbau (13) ausgestanzt,
• die durch Pressen im Presswerkzeug (16) erzeugte Form der Erzeugnisse (19, 20) wird durch Aushärten des Kaschiermittels beim Formen, Ausstanzen und/oder danach stabilisiert.

## Beschreibung

Die Erfindung betrifft ein Verfahren zum Herstellen von zumindest teilweise stabförmigen Erzeugnissen aus Papier, Karton oder einem anderen faserhaltigen Material. Ferner betrifft die Erfindung ein zumindest teilweise stabförmiges Erzeugnis aus Papier, Karton oder einem anderen faserhaltigen Flachmaterial.

Für den Verzehr unterwegs und den Sofortverzehr (Fastfood) wird Essbesteck aus Kunststoff für einmaligen Gebrauch verwendet. Zur Vermeidung von Plastikmüll wird nach alternativen Lösungen zu Plastikbesteck gesucht.

Gemäß den Einweg-Plastik-Richtlinien der EU sind ab 2021 Kunststoffeinwegprodukte verboten, für die es Alternativen aus anderen Materialien gibt. Dazu zählen Plastikbesteck, Rührstäbchen, Trinkhalme und Luftballonhalterungen (Ballonstäbe).

Bereits bekannt sind faltbare Löffel, Gabeln und Messer aus Karton. Die DE 20 2006 005 439 U1 beschreibt einen Faltlöffel, der in eine Banderole aus beschichtetem Karton integriert ist. Die WM 562073 U beschreibt ein Messer aus zwei zusammengefalteten Kartonstreifen mit Messerkontur. Nachteilig sind die geringe Stabilität und die flachen Außenseiten gefalteter Esswerkzeuge.

Bekannt sind ferner Esswerkzeuge für den Einmalgebrauch, die aus einer Vielzahl aufeinander kaschierter und zu einem Formkörper mit auf entgegengesetzten Seiten gleichmäßig gewölbten Oberflächen gepressten Papierlagen bestehen. Die Herstellung dieser Esswerkzeuge ist aufwendig.

Davon ausgehend liegt der Erfindung die Aufgabe zugrunde, ein weniger aufwändiges Verfahren zur Herstellung von zumindest teilweise stabförmigen Erzeugnissen aus Papier, Karton oder einem anderen Fasermaterial mit hinreichender Stabilität zur Verfügung zu stellen.

Die Aufgabe wird durch ein Verfahren mit den Merkmalen von Anspruch 1 gelöst. Ferner wird die Aufgabe durch ein Erzeugnis mit den Merkmalen von Anspruch 13 gelöst. Vorteilhafte Ausführungsarten des Verfahrens und des Erzeugnisses sind in Unteransprüchen angegeben.

Das erfindungsgemäße Verfahren zum Herstellen von zumindest teilweise stabförmigen Erzeugnissen aus Papier, Karton oder einem anderen faserhaltigen Material umfasst die folgenden Schritte:
- mehrere Lagen des Flachmaterials werden mithilfe eines Kaschiermittels zu einem Lagenaufbau aufeinander kaschiert,
- aus dem Lagenaufbau werden bei noch nicht oder erst teilweise ausgehärtetem Kaschiermittel in einem Presswerkzeug unter Anwendung von Druck zumindest teilweise stabförmige Erzeugnisse geformt,
- die Erzeugnisse werden beim oder nach dem Formen aus dem Lagenaufbau ausgestanzt,
- die durch Pressen im Presswerkzeug erzeugte Form der Erzeugnisse wird durch Aushärten des Kaschiermittels beim Formen, Ausstanzen und/oder danach stabilisiert.

Das zumindest teilweise stabförmige Erzeugnis aus Papier, Karton oder einem anderen faserhaltigen Flachmaterial umfasst mehrere Lagen des Flachmaterials, die mithilfe eines Kaschiermittels zu einem Lagenaufbau aufeinanderkaschiert sind, aus dem bei noch nicht oder erst teilweise ausgehärtetem Kaschiermittel das zumindest teilweise stabförmige Erzeugnis geformt, ausgestanzt und in der Form durch Aushärten des Kaschiermittels beim Formen, Ausstanzen und/oder danach stabilisiert ist.

Dadurch, dass das Kaschiermittel beim Formen der Erzeugnisse noch nicht oder erst teilweise ausgehärtet ist, wird erreicht, dass sich die Lagen des faserhaltigen Materials unterschiedlich verformen und/oder geringfügig zueinander verschieben können. Erst nach dem Formen werden die Erzeugnisse beim Ausstanzen der Esswerkzeuge aus dem Lagenaufbau und/oder danach ausgehärtet und in der durch das Pressen im Presswerkzeug erzeugten Form stabilisiert. Dies ermöglicht die Herstellung von hinreichend stabilen, insbesondere biegesteifen, zumindest teilweise stabförmigen Erzeugnissen aus einer geringeren Anzahl und/oder dünneren Lagen des faserhaltigen Flachmaterials als bei herkömmlichen Erzeugnissen für den Einmalgebrauch. Gemäß einer Ausführungsart des Verfahrens wird beim Formen und Ausstanzen im Presswerkzeug Kaschiermittel randseitig zwischen den Lagen des Lagenaufbaus herausgedrückt und werden mit dem herausgedrückten Kaschiermittel die Ränder des Erzeugnisses zumindest teilweise bedeckt. Hierdurch werden die Ränder des Erzeugnisses zumindest teilweise abgedichtet, sodass sie beim Kontakt mit Flüssigkeit oder feuchten Substanzen nur wenig oder keine Feuchtigkeit aufnehmen bzw. aufquellen. Dies ist insbesondere bei der Herstellung von Einwegbesteck von Vorteil, da dieses meist mit Flüssigkeit oder feuchter Nahrung in Kontakt kommt.

Gemäß einer weiteren Ausführungsart wird bei oder vor dem Pressen das Kaschiermittel zwischen den Lagen im zentralen Bereich des herzustellenden Erzeugnisses ausgehärtet oder stärker ausgehärtet und in den Randbereichen des herzustellenden Erzeugnisses nicht ausgehärtet oder weniger stark ausgehärtet, danach das Erzeugnis geformt und ausgestanzt und beim Ausstanzen und/oder danach das Kaschiermittel in den Randbereichen des Erzeugnisses ausgehärtet. Hierdurch wird der Zusammenhalt des Lagenaufbaus im zentralen Bereich und ein Formen in den Randbereichen begünstigt.

Gemäß einer weiteren Ausführungsart wird das Kaschiermittel durch mindestens eine der nachfolgenden Methoden ausgehärtet: Zufuhr von Wärme, Ausübung von Druck, Wegschlagen des Lösungsmittels, Zuführen von Strahlung. Gemäß einer weiteren Ausführungsart wird das Kaschiermittel unter Zufuhr von Wärme mit einer Temperatur im Bereich von 100° bis 200°C, vorzugsweise von etwa 150°C, ausgehärtet.

Gemäß einer weiteren Ausführungsart wird das Kaschiermittel ausgewählt aus einem oder mehreren der nachfolgenden Materialien: Lack, Dispersionsklebstoff, Leim, Wachs, Beschichtung aus Kunststoff.

Gemäß einer weiteren Ausführungsart wird das Kaschiermittel in Form von Streifen oder eines Gitters auf das Flachmaterial aufgetragen. Hierdurch wird ein materialsparender Einsatz von Kaschiermittel bei hinreichender Festigkeit der Erzeugnisse begünstigt.

Gemäß einer weiteren Ausführungsart wird im Lagenaufbau eine stärkere Lage eines Flachmaterials zwischen zwei weniger starken Lagen eines Fachmaterials angeordnet. Hierdurch wird eine Verformung der Erzeugnisse bei geringem Materialeinsatz begünstigt.

Gemäß einer weiteren Ausführungsart hat die stärkere Lage eine Stärke von 150 bis 600 µm, vorzugsweise von 500 µm, und haben die weniger starken Lagen eine Stärke von jeweils 80 bis 250 µm, vorzugsweise von 200 µm. Gemäß einer weiteren Ausführungsart ist mindestens eine äußere Lage des Lagenaufbaus auf einer Außenseite mit Kunststoff beschichtet.

Gemäß einer weiteren Ausführungsart werden die Erzeugnisse nach dem Pressen mittels eines Auswerfers aus dem Presswerkzeug herausgeworfen. Hierdurch wird das Presswerkzeug auf einfache Weise für das Pressen weiterer Erzeugnisse vorbereitet.

Gemäß einer anderen Ausführungsart umfasst der Lagenaufbau nur zwei Lagen eines Flachmaterials. Gemäß einer weiteren Ausführungsart haben die beiden Lagen eine Wandstärke jeweils im Bereich von 200 µm bis 400 µm, vorzugsweise im Bereich von 300 bis 350 µm. Gemäß einer weiteren Ausführungsart besteht jede Lage aus einem einseitig gestrichenen Karton. Gemäß einer weiteren Ausführungsart werden die beiden Lagen auf den ungestrichenen Seiten aufeinanderkaschiert und sind die gestrichenen Seiten auf den Außenseiten des Lagenaufbaus angeordnet.

Gemäß einer weiteren Ausführungsart ist zumindest eine äußere Lage des Lagenaufbaus auf einer Außenseite mit einer Beschichtung versehen, die abweisend und/oder undurchlässig für mindestens eines der nachfolgenden Medien ist: Wasser, Fett, Öl. Gemäß einer weiteren Ausführungsart ist mindestens eine Lage des Lagenaufbaus auf einer Außenseite mit einer Beschichtung aus Kunststoff versehen.

Gemäß einer weiteren Ausführungsart weist das Presswerkzeug mehrere Nutzen zum gleichzeitigen Formen und Ausstanzen mehrerer Erzeugnisse auf. Hierdurch wird eine hohe Ausbringung begünstigt.

Gemäß einer weiteren Ausführungsart umfasst das Presswerkzeug ein Formwerkzeug mit einer unteren Form und einer oberen Form, wobei mindestens eine der beiden Formen eine Negativform (Matrize) des Presslings oder eine Positivform (Patrize) des Presslings aufweist. Gemäß einer weiteren Ausführungsart weist eine Form eine Negativform des Presslings und eine andere Form eine Positivform des Presslings auf.

Gemäß einer weiteren Ausführungsart weist mindestens eine der beiden Formen des Presswerkzeuges Stanzkonturen zum Ausstanzen des Erzeugnisses auf. Hierdurch können das Formen und das Ausstanzen der Erzeugnisse mittels desselben Presswerkzeuges durchgeführt werden.

Gemäß einer weiteren Ausführungsart wird ein Lagenaufbau mit eingeformten Profilen der Erzeugnisse einem Stanzwerkzeug zugeführt und werden die Erzeugnisse mittels des Stanzwerkzeuges ausgestanzt. Bei dieser Ausführungsart werden die Esswerkzeuge in verschiedenen Werkzeugen geformt und gestanzt.

Gemäß einer weiteren Ausführungsart ist das Erzeugnis ein Löffel, eine Gabel, ein Messer oder ein anderes Einwegbesteck oder ein Rührstäbchen, ein Strohhalm, ein Eisstiel, ein Mundspatel (Abstrichspatel) oder ein Ballonstab.

Die Erfindung wird nachfolgend anhand der anliegenden grobschematischen Zeichnung einer Vorrichtung zur Durchführung des Verfahrens erläutert:
Die Vorrichtung umfasst drei Lagervorrichtungen 1, 2, 3 für Vorratsrollen, auf denen Vorratsrollen 4, 5, 6 mit verschiedenen bahnförmigen Flachmaterialien 7, 8, 9 gelagert sind. Die Lagerstationen 1, 2, 3 sind so angeordnet, dass die Bahnen 10, 11, 12 davon kontinuierlich abgezogen und zu einem bahnförmigen Lagenaufbau 13 aus den Flachmaterialien 7, 8, 9 zusammengeführt werden können.

Die Vorratsrolle 4, von der die obere Bahn 10 des Lagenaufbaus 13 abgezogen wird, umfasst eine Bahn aus Karton 10 mit z.B. 200 µm Wandstärke und einer Barriereschicht aus Kunststoff auf der Oberseite.

Die Vorratsrolle 5, von der die mittlere Bahn 11 des Lagenaufbaus 13 abgezogen wird, umfasst eine Bahn 11 aus Karton mit z. B. 500 µm Wandstärke ohne Barriereschicht.

Die Vorratsrolle 6, von der die untere Bahn 12 des Lagenaufbaus 13 abgezogen wird, umfasst eine Bahn aus Karton mit z.B. 200 µm Wandstärke und einer Barriereschicht auf der Unterseite.

In einer Kaschierstation 14 werden die Bahnen 10, 11, 12 z.B. mittels Lack, Dispersionsklebstoff, Leim oder Wachs als Kaschiermittel 15 aufeinanderkaschiert. Das Kaschiermittel 15 wird zwischen den Bahnen 10, 11, 12 zugeführt. Alternativ können die Bahnen 10, 11, 12 auch durch Erhitzung von Beschichtungen aus Kunststoff einer oder mehrerer Bahnen 10, 11, 12 aufeinanderkaschiert werden.

Der Lagenaufbau 13 wird von der Kaschierstation 14 aus einem Presswerkzeug 16 zugeführt, welches eine untere Form 17 und eine obere Form 18 aufweist. Die untere Form 17 ist eine Negativform (Matrize) und die obere Form 18 ist eine Positivform (Patrize) zur Herstellung eines Presslings 19. Bei dem Pressling 19 handelt es sich um ein Esswerkzeug 20. Im Beispiel ist dies ein Löffel.

Ferner ist die obere Form 18 um den nach unten vorstehenden Bereich 21 herum, der in die Vertiefung 22 der unteren Form 17 hineingepresst wird, mit umlaufenden Stanzkonturen 23 zum Ausstanzen des Esswerkzeuges versehen.

Das Presswerkzeug 16 kann mehrere Nutzen zum gleichzeitigen Formen und Ausstanzen mehrerer Esswerkzeuge 20 aufweisen.

Die untere Form 17 ist ortsfest gelagert und die obere Form 18 ist mittels einer Verlagerungsvorrichtung 24 nach unten verlagerbar, um einen Bereich des Lagenaufbaus 13, der zwischen der oberen Form und der unteren Form angeordnet wird, zu einem Esswerkzeug 20 zu pressen und auszustanzen.

Zusätzlich kann das Presswerkzeug 16 einen Auswerfer zum Auswerfen des Presslings 19 aus der Vertiefung 22 der unteren Form 17 aufweisen.

Dadurch, dass das Kaschiermittel 15 vor dem Pressen noch nicht oder noch nicht vollständig ausgehärtet ist, wird das Formen des Presslings 19 erleichtert, denn hierdurch können sich die Lagen des Lagenaufbaus unterschiedlich verformen (z.B. dehnen, stauchen oder biegen) und/oder relativ zueinander verschieben. Durch nachträgliches Aushärten des Kaschiermittels wird der Pressling 19 in seiner Form stabilisiert. Beim Pressen können Teile des Kaschiermittels 15 aus den äußeren Rändern des Presslinges 19 herausgepresst werden, sodass sie diese teilweise abdecken und vor dem Eintritt von Flüssigkeit schützen.

Beim Pressen kann der Pressdruck das Aushärten des Kaschiermittels beschleunigen. Ferner ist es möglich, das Aushärten beim oder nach dem Pressen durch Zufuhr von Wärme, Wegschlagen des Lösungsmittels und/oder Zufuhr von Strahlung zu beschleunigen. Für das Aushärten durch Wärmezufuhr weist das Presswerkzeug eine eingebaute Heizung 24 auf.

Nach dem Pressen und Auswerfen des Esswerkzeuges 20 aus dem Presswerkzeug 16 kann ein weiterer Teil des Lagenaufbaus 13 zwischen oberer Form 18 und unterer Form 17 positioniert und daraus ein Pressling 19 geformt und gestanzt werden.

Durch die Barriereschichten auf den Außenseiten des Presslinges 19 wird eine flüssigkeitsdichte Oberfläche erzielt.

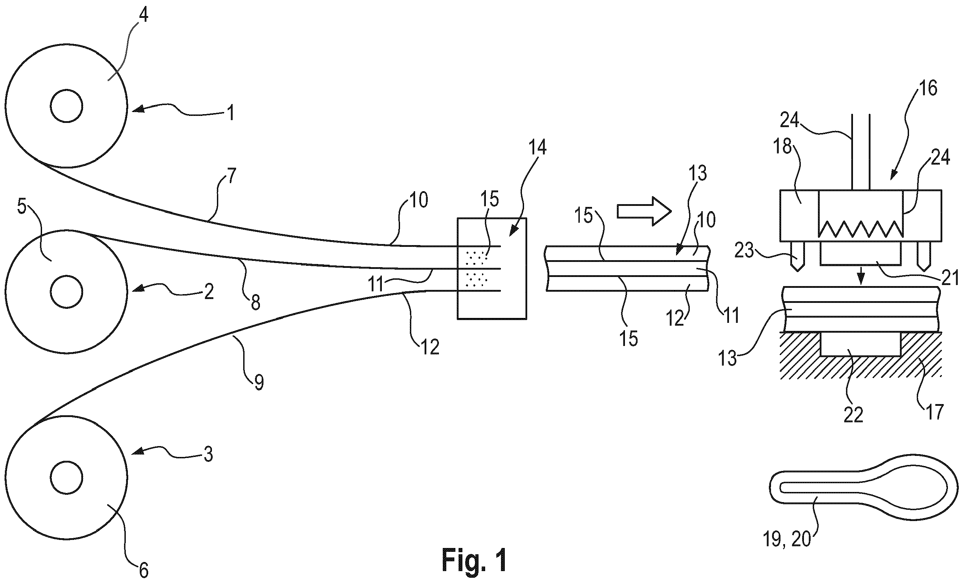

## Patentansprüche

1. Verfahren zum Herstellen von zumindest teilweise stabförmigen Erzeugnissen aus Papier, Karton oder einem anderen faserhaltigen Flachmaterial umfassend die folgenden Schritte:
• mehrere Lagen des Flachmaterials werden mithilfe eines Kaschiermittels zu einem Lagenaufbau aufeinander kaschiert,
• aus dem Lagenaufbau werden bei noch nicht oder erst teilweise ausgehärtetem Kaschiermittel in einem Presswerkezeug unter Anwendung von Druck zumindest teilweise stabförmige Erzeugnisse geformt,
• die Erzeugnisse werden beim oder nach dem Formen aus dem Lagenaufbau ausgestanzt,
• die durch Pressen im Presswerkzeug erzeugte Form der Erzeugnisse wird durch Aushärten des Kaschiermittels beim Formen, Ausstanzen und/oder danach stabilisiert.

2. Verfahren nach Anspruch 1, bei dem beim Formen und Ausstanzen im Presswerkzeug Kaschiermittel randseitig zwischen den Lagen des Lagenaufbaus herausgedrückt und mit dem herausgedrückten Kaschiermittel die Ränder des Erzeugnisse zumindest teilweise bedeckt werden.

3. Verfahren nach Anspruch 1 oder 2, bei der vor dem Pressen das Kaschiermittel zwischen den Lagen im zentralen Bereich des herzustellenden Erzeugnisses ausgehärtet oder stärker ausgehärtet wird und in den Randbereichen des herzustellenden Erzeugnisses nicht ausgehärtet oder weniger stark ausgehärtet wird, danach das Erzeugnis geformt und ausgestanzt wird und schließlich das Kaschiermittel in den Randbereichen des Erzeugnisses ausgehärtet wird.

4. Verfahren nach einem der Ansprüche Anspruch 1 bis 3, bei dem das Kaschiermittel durch mindestens eine der nachfolgenden Methoden ausgehärtet wird: Zufuhr von Wärme, Ausüben von Druck, Wegschlagen des Lösemittels, Zufuhr von Strahlung.

5. Verfahren nach einem der Ansprüche 1 bis 4, bei dem das Kaschiermittel ausgewählt wird aus einem oder mehreren der nachfolgenden Materialien: Lack, Dispersionsklebstoffe, Leim, Wachs, Beschichtung aus Kunststoff.

6. Verfahren nach einem der Ansprüche 1 bis 5, bei dem das Kaschiermittel in Form von Streifen oder eines Gitters auf das Flachmaterial aufgetragen wird.

7. Verfahren nach einem der Ansprüche 1 bis 6, bei dem im Lagenaufbau eine stärkere Lage eines Flachmaterials zwischen zwei weniger starken äußeren Lagen eines Flachmaterials angeordnet wird, wobei vorzugsweise die stärkere Lage eine Stärke von 150 bis 600µm, vorzugsweise von 500µm, und die weniger starke Lagen eine Stärke von jeweils 80 bis 250µm, vorzugsweise von 200µm, aufweisen.

8. Verfahren nach einem der Ansprüche 1 bis 6, bei dem der Lagenaufbau nur zwei Lagen eines Flachmaterials umfasst, wobei vorzugsweise die beiden Lagen des Flachmaterials jeweils eine Wandstärke im Bereich von 200 bis 400 µm, vorzugsweise im Bereich von 300 bis 350 µm aufweisen.

9. Verfahren nach Anspruch 8, bei dem die beiden Lagen auf den Außenseiten jeweils einen Strich aufweisen und mit den ungestrichenen Seiten aufeinanderkaschiert sind.

10. Verfahren nach einem der Ansprüche 1 bis 9, in dem mindestens eine äußere Lage des Lagenaufbaus auf einer Außenseite eine Beschichtung aufweist, die abweisend und/oder undurchlässig für mindestens eines der nachfolgenden Medien ist: Wasser, Fett, Öl.

11. Verfahren nach einem der Ansprüche 1 bis 10 umfassend mindestens eines der folgenden Merkmale:
• die Erzeugnisse werden nach dem Pressen mittels eines Auswerfers aus dem Pressewerkzeug ausgeworfen,
• das Presswerkzeug weist mehrere Nutzen zum gleichzeitigen Formen und Ausstanzen mehrerer Erzeugnisse auf,
• das Presswerkzeug umfast ein Formwerkzeug mit iener unteren Form und einer oberen Form, wobei mindestens eine der beiden Formen eine Negativform des Presslings oder eine Positivform des Presslings aufweist,
• mindestens eine der beiden Formen des Presswerkzeugs weist Stanzkonturen zum Ausstanzen des Erzeugnisses auf,
• der Lagenaufbau mit den eingeformten Esswerkzeugprofilen wird einem Stanzwerkzeug zugeführt und mittels des Stanzwerkzeuges werden die Erzeugnisse ausgestanzt.

12. Verfahren nach einem der Ansprüche 1 bis 11, bei dem das Erzeugnis ein Löffel, eine Gabel, ein Messer oder ein anderes Einwegbesteck oder ein Rührstäbchen, ein Strohhalm, ein Eisstiel, ein Mundspatel oder ein Ballonstab ist.

13. Erzeugnis aus Papier, Karton oder einem anderen faserhaltigen Flachmaterial, das zumindest teilweise stabförmig ist, umfassen mehrere Lagen des Flachmaterials, die mithilfe eines Kaschiermittels zu einem Lagenaufbau aufeinanderkaschiert sind, aus dem bei noch nicht oder erst teilweise ausgehärtetem Kaschiermittel das zumindest teilweise stabförmige Erzeugnis geformt, ausgestanzt und in der Form durch Aushärten des Kaschiermittels stabilisiert ist.

14. Erzeugnis nach Anspruch 13, das eines oder mehrere der nachfolgenden Merkmale aufweist:
• die Ränder des Erzeugnisses sind zumindest teilweise durch randseitig zwischen den Lagen des Lagenaufbaus herausgedrücktes Kaschiermittel bedeckt,
• das Kaschiermittel ist Lack, Dispersionsklebstoff, Leim, Wachs, Beschichtung aus Kunststoff,
• das Kaschiermittel ist in Form von Streifen oder eines Gitters auf das Flachmaterial aufgetragen,
• Der Lagenaufbau weist eine stärkere Lage eines Flachmaterials zwischen zwei weniger starken äußeren Lagen eines Flachmaterials auf,
• die stärkere Lage hat eine Stärke von 150 bis 600 µm, vorzugsweise von 500 µm, die weniger starken Lagen haben eine Stärke von jeweils 80 bis 250 µm, vorzugsweise von 200 µm,
• der Lagenaufbau umfasst nur zwei Lagen eines Flachmaterials,
• die beiden Lagen des Flachmaterials weisen jeweils eine Wandstärke im Bereich von 200 bis 400 µm, vorzugsweise im Bereich von 300 bis 350 µm auf,
• die beiden Lagen auf den Außenseiten weisen jeweils einen Strich auf und sind mit den ungestrichenen Seiten aufeinanderkaschiert,
• mindestens eine Lage des Lagenaufbaus weist auf der Außenseite eine Beschichtung auf, die abweisend und/oder undurchlässig für mindestens eine der nachfolgenden Medien ist: Wasser, Fett, Öl.

15. Erzeugnis nach Anspruch 13 oder 14, das ein Löffel, eine Gabel, ein Messer oder ein anderes Einwegbesteck oder ein Rührstäbchen, ein Strohhalm, ein Eisstiel, ein Mundspatel oder ein Ballonstab ist.
